# EUROPEAN PATENT SPECIFICATION

(11) **EP 1 495 612 B1**
(45) Date of publication and mention of the grant of the patent: **17.11.2010**
(21) Application number: 03715300.4
(22) Date of filing: 03.04.2003
(51) Int. Cl.: H04L 29/06

(54) **METHOD AND APPARATUS FOR EFFICIENT TRANSMISSION OF VOIP TRAFFIC**
VERFAHREN UND VORRICHTUNG ZUR EFFIZIENTEN ÜBERTRANGUNG VON VOIP VERKEHR
PROCEDE ET APPAREIL DE TRANSMISSION EFFICACE DE TRAFIC VOIP

(30) Priority: 15.04.2002 IL 14916502
(43) Date of publication of application: 12.01.2005
(73) Proprietor: VERAZ Networks Ltd., Petach-Tikva 49517 (IL)
(72) Inventor: PHILIPS, David, Holon 58362 (IL); LITVAK, Oleg, 44837 Ariel (IL)
(74) Representative: Modiano, Micaela Nadia
(86) International application number: PCT/IL2003/000276
(87) International publication number: WO 2003/088614

(56) References cited:
- EP-A- 1 063 830
- WO-A-00/11849
- HANDLEY M: "GERM: GENERIC RTP MULTIPLEXING" INTERNET ENGINEERING TASK FORCE, XX, XX, 11 November 1998 (1998-11-11), pages 1-7, XP002139359
- HOSHI T ET AL: "VOICE STREAM MULTIPLEXING BETWEEN IP TELEPHONY GATEWAYS" IEICE TRANSACTIONS ON INFORMATION AND SYSTEMS, INSTITUTE OF ELECTRONICS INFORMATION AND COMM. ENG. TOKYO, JP, vol. E82-D, no. 4, April 1999 (1999-04), pages 838-845, XP000832566 ISSN: 0916-8532
- ROSENBERG J ET AL: "Issues and Options for RTP Multiplexing" IETF DRAFFT, 1 October 1998 (1998-10-01), XP002149446 Retrieved from the Internet: <URL:ftp://ftp.informatik.uni-bremen.de/pu b/doc/internet-drafts/draft-ietf -avt-muxiss> [retrieved on 2000-09-29]
- TANIGAWA K ET AL: "An RTP Simple Multiplexing Transfer Method for Internet Telephony Gateway" IETF DRAFT, 16 June 1998 (1998-06-16), XP002127740 Retrieved from the Internet: <URL:ftp://ftp.bbnplanet.com/internet-draf ts/draft-tanigawa-rtp-multiplex- 00.txt> [retrieved on 2000-01-14] cited in the application

## Description

### Field of the Invention

The present invention relates to efficient transmission of IP telephony signals between media-gateways by multiplexing signals of several channels into a single IP packet, thus reducing the transmission overhead per each channel.

### Background of the Invention

The fast growth of the INTERNET has stimulated the development of IP networks. At present there is a clear trend to use IP networks not only for INTERNET traffic but to provide all telecommunication services using this infrastructure. One of these applications is transmission of telephony traffic over IP networks by converting the telephony traffic to IP packets. This application allows one PSTN subscriber to call another PSTN subscriber each connected through Voice over IP (to be referred to herein as "VoIP") media-gateway to the INTERNET, eliminating the need for long distance telephone network.

In a VoIP telephony connection, two sides of the PSTN network are interconnected by VoIP media-gateways. In such application, the telephony signals are converted into IP packets using Real-time Transport Protocol ("RTP")/User Datagram Protocol ("UDP")/Internet Protocol("IP"), RTP/UDP/IP, connection. RTP is an Internet protocol for transmission of real-time data such as audio and video. RTP itself does not guarantee real-time delivery of data, e.g. retransmission of undelivered packets, but it does provide mechanisms for the sending and receiving applications to support streaming data. Typically, RTP runs on top of the UDP protocol. UDP is a connectionless protocol that, like TCP, runs on top of IP networks. Unlike TCP/IP, UDP/IP provides very few error recovery services, offering instead a direct way to send and receive datagrams over an IP network. In addition to RTP carrying VoIP packets, UDP is used to transmit other telephony signals such as digitized facsimile signals according to ITU Recommendation T.38.

VoIP media-gateways provide an interface between existing TDM based networks packet switched IP data networks. For example, in a VoIP application the voice samples are compressed using a compression algorithm such as G.729. This algorithm is operative to convert a block of 80 voice samples (10 msec) into a compressed signal of 10 bytes. Typically, two consecutive blocks of compressed voice (20 bytes) are transmitted in one IP packet every 20 msec interval. As will be appreciated, small size packets are subjected to large overhead when transferred using the Real time Transport Protocol (RTP), as the RTP/UDP/IP overhead is 40 bytes (12+8+20) for a simple speech packet. For example, for a 20 byte packet transferred via RTP/UDP/IP the overhead presents 67% of the packet (40 byte overhead/(40+20) byte in a packet). In addition, for each voice channel a single UDP/IP connection (a pair of UDP ports) is established between the media-gateways. This requires significant resources at each media-gateway and generates many small size packets on the IP network.

It is therefore desired to transmit several voice channels in each IP packet. This will not only reduce the relative overhead per each voice packet, but also reduce the total number of packets to be processed by the media-gateways and transmitted over the IP network. It can be appreciated that there is a need for a method and apparatus for eliminating inefficiencies in transporting short packets between IP telephony media-gateways connected by an IP network. It can also be seen that there is a need for a method and apparatus that enables a number of channels to share a single UDP/IP connection.

A method for transmission of multiple voice packets over a single RTP/UDP/IP connection is disclosed in PCT patent application WO 00/11849. By this method, a number of voice packets are packed into one RTP payload. Each small voice packet (called mini-packet) is preceded by a 2-byte header (called mini-IP header). The information in mini-IP header comprises: a one-byte Channel Identifier - CID, a six-bit length indicator - LI, and a two-bit sequence number - SN. The CID which is used to identify the voice channels is established through a negotiation process between the media-gateways during the connection setup, whereas the LI is used to indicate the length of the mini-packet. However there are some disadvantages associated with this method. First, it does not provide transparency of information that exists in the RTP header of each original voice packet as the original CID in the UDP header comprises two bytes instead of the one by this method. Also the RTP header comprises a time-stamp which is not transmitted in accordance with this method. Transparent transmission of the RTP header information is very important and it also simplifies the communication as no translation or reconstruction of information is required. On the other hand it is important that this transparency should not significantly reduce the transmission efficiency of voice packet over an IP network.

Another method for multiplexing several VoIP channels over a single IP connection is disclosed in a draft proposal to the IETF "draft-tanigawa-rtp-multiplex-01.txt" entitled "Simple RTP Multiplexing Transfer Methods for VoIP", and dated November 18, 1998. This document describes a method to reduce the IP-UDP header overhead of RTP streams by concatenating RTP packets sharing the same Internet telephony media-gateway destination, into a single UDP packet, wherein a number of RTP packets, each comprising an RTP header and an RTP payload are connected to form the UDP payload. Although this publication teaches how to increase the efficiency of bandwidth utilization, this efficiency is limited, and one of the major drawbacks in the method disclosed is that the user should be identified by the SSRC value of the RTP header, which is a random number.

A further method for multiplexing several VoIP channels over a single IP connection is disclosed in a draft proposal to the IETF "draft-ietf-avt-tcrtp-06.txt" entitled "Tunneling Multiplexed Compressed RTP ("TCRTP")" and dated February 27, 2002. This document describes a method to improve the end-to-end bandwidth utilization of RTP streams over an IP network using compression and multiplexing. The improvement is accomplished by combining three standard protocols: Enhanced CRTP for header compression, PPP Multiplexing [PPP-MUX] for multiplexing of several data packets over a single IP packet and L2TP tunneling [L2TP] for transmission of PPP over an IP network. However, major drawbacks of this method are that it requires implementation of complex state machines that must be synchronized at both ends of the IP network and is not fully optimized for IP telephony applications.

Another method is disclosed in EP1,063,830, by which payload associated with multiple packets is multiplexed into a single multiplexed packet and each payload portion is identified by a mini-header within the multiplexed packet. Still, the method described in this publication does not consider an option whereby some of the packets will comprise a protocol header in a compressed form, and does not suggest a way of dealing with such an option.

### Summary of the Invention

To overcome the limitations in the prior art described above, and to overcome other limitations that will become apparent upon reading and understanding the present specification, it is the object of the present invention to provide an efficient real-time transport protocol multiplexing method and apparatus for transporting compressed speech and other telephony or multi-media services between IP telephony media-gateways.

The present invention solves the above-described problems by providing a method and apparatus for eliminating inefficiencies in transporting short packets between IP telephony media-gateways connected by an IP network, while the method and apparatus provided by the present invention enable a number of users to share a single UDP/IP connection.

Further objects and features of the invention will become apparent to those skilled in the art, from the following description and the accompanying drawings.

In accordance with an embodiment of the present invention there is provided the method according to claim 1.

Preferably, each of the communication frames comprises a plurality of mini packets having the structure described.

According to another preferred embodiment of the invention, al least one of the communication frames adapted to be used as a UDP payload, further comprises at least one frame header (e.g. an RTP header) which may be used to carry information that relates to the proceeding various mini packets which follow that frame header.

By a preferred embodiment of the invention, the identification of a user in each of the plurality of mini packets is a 2 byte long channel ID, the flag is one bit long and the length indicator (LI) is 12 bits long. Preferably, the identification of a user associated with a data packet comprises the number of the port through which this data packet is transmitted.

According to a preferred embodiment of the invention, a communication frame may comprise at least one mini packet having a protocol header of a transparent mode. In such a mode, the protocol header is a member selected from the group consisting of: an RTP header, an RTCP header, a T.38 header and a header of traffic of the type Modem over IP (MoIP). In a preferred example, the protocol header is an RTP header as defined in IETF RFC 1889 and in IETF RFC based on draft "draft-ietf-avt-rtp-new-11.txt" of 20 November 2001.

According to another preferred embodiment of the invention, a communication frame may comprise at least one mini packet having a protocol header of a compressed mode, In such a compressed mode, the protocol header comprises an indication of a sequential number of a data packet associated therewith and an indication of time in which said data packet is transmitted. Preferably, the packet sequence number indicator is less than 16 bits long, more preferably, it is 12 bits long. By another embodiment, the time stamp indicator is less than 32 bits long, more preferably, it is 20 bits long.

By yet another preferred embodiment, the data packet sequence number indicator comprises the least significant bits of the data packet sequence number and the time stamp indicator comprises the least significant bits of the data packet timestamp.

By still another embodiment of the invention, the mode of each of the protocol headers of the plurality of mini packets comprising such a communication frame is determined by the following criteria:
a protocol header of the mini packet transmitted at a beginning of a communication session, shall be transmitted in a transparent mode;
whenever the information in a protocol header is different only in the sequence number and time stamp from the information included in the protocol header of the preceding mini packet and received from the same user, , the protocol header shall be transmitted in a compressed mode;
if mini packets associated with a user were all transmitted for a predetermined time with their protocol headers being in a compressed mode, the protocol header of the proceeding mini packet shall be transmitted in a transparent mode.

In accordance with yet another embodiment of the invention, there is provided a method for increasing bandwidth usage efficiency of an IP network which comprises:
creating a composite header comprising a mini header and a protocol header for each of a plurality of data packets, each mini header providing identification of a user associated with a data packet;
adding each composite header to the data packet associated therewith to form a mini packet;
multiplexing a plurality of mini packets into a UDP payload; and
transmitting the UDP payload over a single UDP/IP connection.

Preferably, the plurality of data packets are received from two or more users.

By another embodiment, the identification of a user further comprises a unique channel identifier for each of the two or more users. More preferably, the channel identifier is assigned to packets transmitted from a user when the user requests access to the IP network.

According to still another embodiment of the invention, the data packet comprises voice information. The term "voice" as used herein, is used to denote voice signals as well as voice-related traffic. Such signals could be voice signals, facsimile signals, voiceband data signals such as modem, DTMF and the like signals, signals used for signaling, etc. The term "VoIP" or IP telephony as used herein is used to denote the transport of packetized voice and also include enhanced services and complex infrastructure. It includes among others, PC-to-PC, PC-to-phone, and phone-to-phone applications whether the call transaction rides over the public Internet, the PSTN, or a private Internet connection such as an IP VPN. This term should be understood to include voice over IP as explained above but also voice over ATM, voice over frame relay, voice over DSL, voice over cable, voice over broadband, and the like.

Another preferred use of the present invention is for transmitting facsimile communication, in which case at least one of the plurality of data packets within the communication frame described, is a data packet that is compatible with ITU Recommendation T.38 and carries facsimile signal.

According to another embodiment of the invention the composite header of each data packet multiplexed into said UDP payload is transparent to intermediate IP routers.

By another embodiment, the method provided further comprises the step of de-assembling the UDP payload back into the data packets.

In accordance with another aspect of the present invention there is provided an IP system according to claim 13 comprising:
a remote VoIP media-gateway; and
a local VoIP media-gateway;
wherein the remote and local VoIP media-gateways communicate using a protocol, the protocol comprising:
creating a composite header comprising a mini header and a protocol header for each of a plurality of data packets received from a plurality of users at the local VoIP media-gateway, each composite header providing identification of a user associated with a packet;
adding each composite header to the data packet associated therewith to form mini packets; multiplexing the mini packets into a UDP payload; and
transmitting the UDP payload over a single UDP/IP connection to the remote IP media-gateway.

Furthermore, the IP network as described above should be understood also to encompass a case where the local VoIP media-gateway is interconnected with a plurality of remote media-gateways, in which case the local media-gateway may communicate with some or all of the remote media-gateway in accordance with the method provided by the present invention.

Preferably, the identification of a user further comprises a unique channel identifier for each of the two or more users.

According to still another aspect of the invention there is provided an IP packetizer apparatus according to claim 14, comprising:
means operative to create a composite header for each of a plurality of data packets and to add said composite header to a data packet associated therewith;
multiplexing means operative to multiplex a plurality of communication frames in accordance with the communication protocol described above; and
transmitting means operative to transmit the UDP payload over a single UDP/IP connection.

Also, in accordance with the present invention there is provided a VoIP media-gateway comprising:
means for creating a composite header for each of a plurality of data packets received from a plurality of users, each composite header providing identification of a user associated with a packet;
means for adding each composite header to the data packet associated therewith to form mini packets;
means for multiplexing the mini packets into a UDP payload; and
means for transmitting the UDP payload over a single UDP/IP connection.

Further embodiments are defined in the dependent claims.

### Brief Description of the Drawings

The present invention will be understood and appreciated more fully from the following detailed description, taken in conjunction with the drawings in which:
Fig. 1 shows an application scenario in which two sides of a communication session are interconnected via an IP network;
Fig. 2 illustrates the application of mini packets in VoIP media-gateways.
Figs. 3A, 3B and 3C illustrate mini packets according to the present invention in transparent and compressed modes;
Fig. 4 illustrates the multiplexing of mini packets in a UDP payload;
Fig. 5 illustrates a layered communication model; and
Fig. 6 illustrates the use of the TIMER-MUX according to the present invention.

### Detailed Description of the Invention

In the following description of the exemplary embodiment, reference is made to the accompanying drawings which form a part hereof, and in which is shown by way of illustration the specific embodiment in which the invention may be practiced.

It is to be understood that other embodiments may be utilized, as structural changes may be made without departing from the scope of the present invention.

The present invention provides a an efficient method and apparatus for transporting short packets such as compressed speech packets between IP telephony media-gateways connected by a IP network. The present invention enables a number of low bit rate connections (compressed speech) to share a single UDP/IP connection, thus reducing the RTP/UDP/IP overhead. A mini header is added to each packet received from a user before it is assembled with packets from other users into a single UDP payload.

The foregoing description of the exemplary embodiment of the invention is presented for the purposes of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

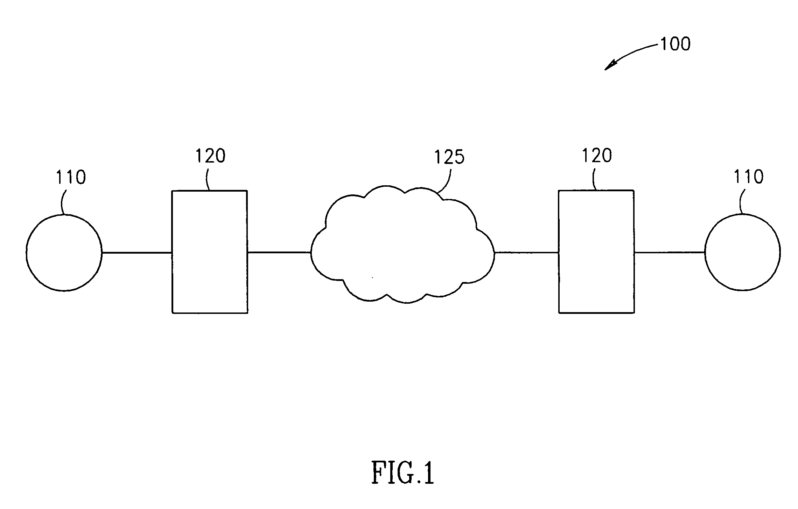

Fig. 1 shows an application scenario 100 in which two user sites 110 are interconnected by media-gateways 120, located at two ends of an IP network 125. In such an application, a telephone call between users 110 located at either side of the media-gateways 120 is carried by a separate RTP/UDP/IP connection. The codecs used at the media-gateway to compress incoming voice calls generates packets with a size typically ranging from 5 to 20 bytes. When using a voice codec operative in accordance with ITU-T Recommendation G.711, the packet size may typically range between 5 to 20 msec (40 to 160 bytes per packet).

For example, the ITU-T Recommendation G.729 specifies a voice compression algorithm that generates 10 bytes every interval of 20 ms speech sample. Typically, two blocks of 10 bytes each, are sent in one IP packet, every 20 msec. Many other voice compression algorithms also generate small packets. However, these small size packets require a large overhead when they are transferred using the Real time Transport Protocol (RTP).

The RTP/UDP/IP overhead is 40 bytes (12+8+20) for each speech packet. For example, if a 20 bytes packet is transferred via RTP/UDP/IP then the overhead is 67%, i.e., 40/(40+20). In addition, for each call request a single UDP/IP connection is established between the media-gateways 120 requiring a large amount of processing and storage in media-gateways 120.

Congestion in IP networks results in packet loss at routers and UDP does not have any retransmission mechanism to recover lost packets. Also, real time applications such as speech are intolerant to delay caused by re-transmission. In a normal RTP method, each individual speech packet is transmitted as an IP packet, which generates a large number of packets between the media-gateways. This heavy traffic volume is a potential situation for congestion and packet loss at IP routers.

The large overhead associated with the transfer of small packets (compressed speech) through RTP/UDP/IP has been one of the drawbacks of IP telephony. In order to minimize the overhead, RTP/UDP/IP header compression is applied.

However, this method requires carrying out compressing/decompressing activities at routers, as well as some additional processing overhead.

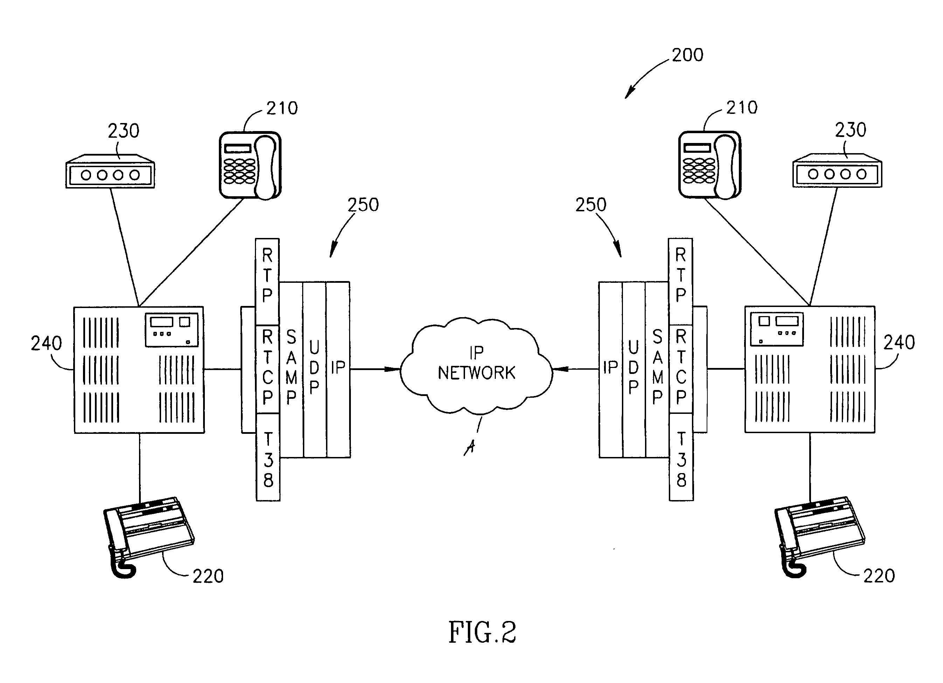

Fig. 2 illustrates the application 200 of mini packets used in transporting voice communication of users, between IP telephony media-gateways. Some of the most obvious scenarios 200 are shown in Fig. 2. Traditional telephony users such as telephone users 210, and/or facsimile users 220 and/or modem users 230, interconnected via PBX 240 by IP media-gateways 250 is a typical scenario where mini packets of the present invention improves the bandwidth efficiency of the IP network. Of course other implementations can also be adopted e.g. in wireless networks.

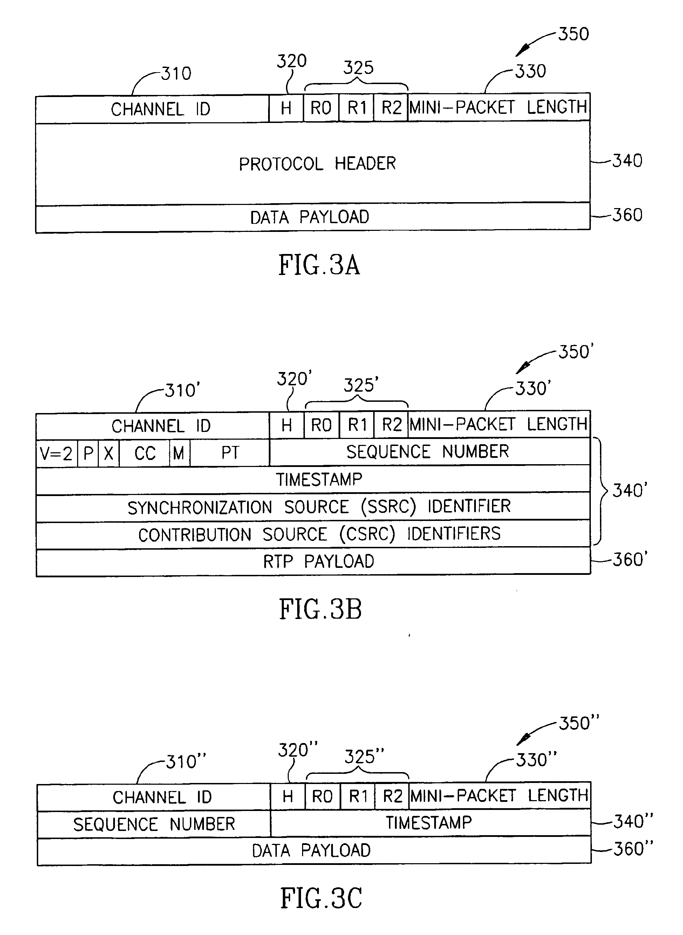

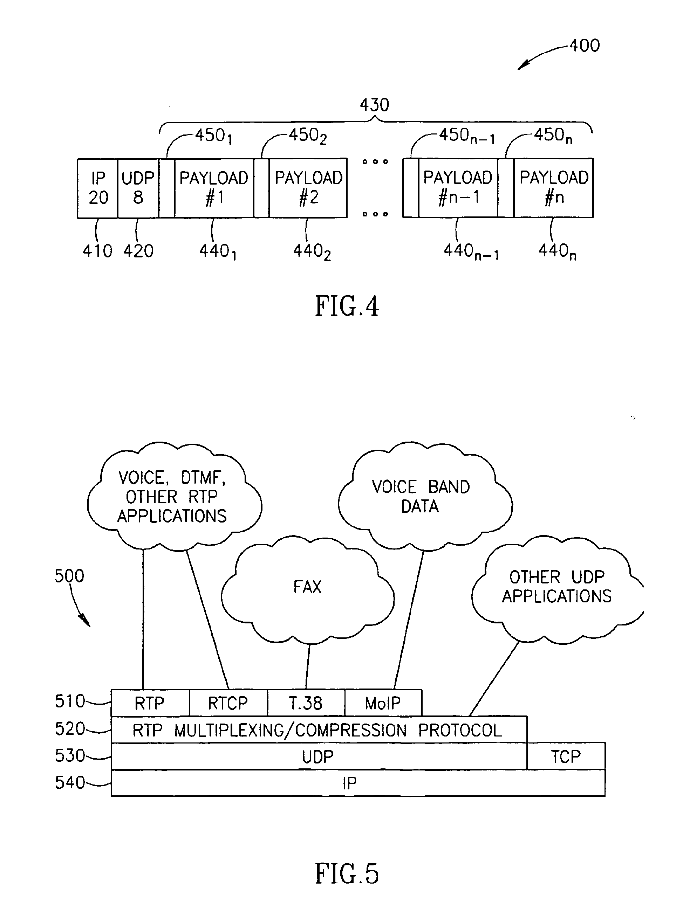

Figs. 3A to 3C and 4 illustrate mini packets used in accordance with the present invention to improve the bandwidth efficiency in accordance with the communication protocol of the present invention (which for the purpose of convenience will be referred hereinafter as "SAMP"). A typical mini packet comprises a composite header (having a mini header and a protocol header in a compressed/transparent mode) and the application payload. The application payload of the mini packet may carry any type of UDP application protocol (e.g. RTP, RTCP, T.38, Modem over IP etc.). In the example presented in Fig. 3A, the composite header comprises the following:
Channel ID (CID), 310, - 2 bytes. This field identifies the user identity of the SAMP channel. Preferably, this field should be copied from the original UDP destination port of the user, which is also 2 bytes long.
Flag, 320, indicating the protocol header mode (H) - 1 bit. This 1 bit field is used to identify the mode (format) of SAMP protocol header i.e. transparent or compressed. If the protocol header is not compressed (transparent mode SAMP/RTP Header), as illustrated in Fig. 3A then this bit is set to "0". If the protocol header is in the compressed mode (Compressed mode SAMP/RTP Header), then this field is set to "1".
Reserved field (R), 325 - 3 bits. This field is an optional field and is reserved for future applications, such as for transmission of control information, etc.
Mini packet length indicator (LI), 330 - 12 bits. This field indicates the length in bytes of the variable size mini packet. A maximum mini-packet size of 4096 bytes is preferred.
Protocol header, 340. Examples for such a protocol header are RTP header, RTCP header, a header as defined in ITU-T Recommendation T.38 or for Modem over IP ("MoIP") applications.

The combination of this composite header with data packet 360, is in fact the mini packet of the present invention.

A more detailed example of a mini packet comprising a mini header in a transparent mode that includes an RTP protocol header as defined in IETF RFC 1889, is presented in Fig. 3B. The mini packet 350' presented in this Fig. comprises:
Channel ID (CID), 310', - 2 bytes.
Flag, 320', indicating the protocol header mode (H) - 1 bit, which in this case is set to "0".
Reserved field (R), 325' - 3 bits.
Mini packet length indicator (LI), 330' - 12 bits.
RTP Header 340' as defined in RFC1889 - although in this Fig. the RTP protocol header is shown as comprising 16 bytes (4 lines of 4 bytes each), still according to IETF RFC 1889, the first twelve bytes are present in every RTP packet, while the 4 bytes long Contribution Source (CSRC) identifiers are present only when inserted by a mixer.
payload of the data packet, 360'.

Fig. 3C illustrates an example of a mini packet 350" in a compressed mode, comprising:
Mini header:
   Channel ID (CID), 310", - 2 bytes.
   Flag, 320", indicating the protocol header mode (H) - 1 bit, which in this case is set to "1".
   Reserved field (R), 325" - 3 bits.
   Mini packet length indicator (LI), 330" - 12 bits.
Protocol header 340":
   Compressed RTP header field of 4 bytes which comprises:
      Sequence number, 380" - 12 bits long; and
      Timestamp, 390" -20 bits long.

The mini packet further comprises the payload of the data packet, 360".

It should be appreciated that the purpose of the transparent mode is to provide simple and transparent transmission of the RTP header. However, in alternative embodiments, any of the Sequence number and the Timestamp may be presented in the compressed mode by different number of bits, as long as this presentation requires less than the original number of bits thereof.

Fig. 4 illustrates an IP packet 400, which comprises a communication frame (a SAMP frame) of the present invention. Packet 400 comprises:
a 20 bytes IP header field, 410;
a 8 bytes UDP header field, 420; and
a SAMP frame, 430.

The SAMP frame 430 comprise a number of concatenated mini packets 440_{1, 2...,n}, each with its corresponding composite header 450_{1,2...,n}, respectively, and where each of the mini packets may carry a different protocol. The SAMP frame has a predefined maximum size (MAX-FRAME_SIZE). In order to avoid segmentation, this size shall preferably not exceed 1500 bytes.

Configuration management shall preferably also predefine a maximum timer (TIMER-MUX) for SAMP frame aggregation. This timer ensures that a maximum packet delay is not exceeded during low channel activity periods.

Transmission of the SAMP frame to the corresponding far end media-gateway could be triggered by any of the following conditions:
if the maximum defined SAMP frame size has been reached or has been exceeded; or
if the SAMP aggregation timer has expired.

Now let us revert to a typical communication procedure carried out in accordance with the present invention.

### Transmitter side:

When a channel is operating with protocol header compression the transmitter will alternate the SAMP mini packet format between transparent mode mini packets and compressed mode mini packets.

The transparent mode RTP header shall be applied in the following cases:
at the beginning of a new call;
when a change takes place in the RTP fixed header fields excluding sequence number and timestamp fields; or when a configurable timer "RTP header refresh - timer" has expired.

In order to provide robustness against packet losses at the IP network, the transparent protocol header mode shall preferably be applied at least N times consecutively (e.g. N is equal to 2 or 3 times). More preferably, the number N shall be a configurable parameter and be determined to match the required IP network performance.

The compressed RTP header shall be applied in all cases when there is no need to send packets at the transparent mode as defined above.

### Receiver side:

When a channel is operated in accordance with the present invention, the receiver shall be capable to receive both transparent mode mini packets as well as compressed mode mini packets.

While receiving compressed mode mini packets, the receiver shall retrieve the missing information fields of the protocol header from the last received transparent mini packet and reconstruct to non-compressed RTP header.

The following are some examples demonstrating the advantages that may be achieved by using the present invention. In these examples, the bandwidth efficiency is defined as useful payload/ total payload (which includes all overheads associated with the transfer of the useful payload).
1) Use of non-multiplexed flows as demonstrated in one of the prior art solutions:
   The calculated efficiency is equal to:
      Payload / (IP+UDP+RTP headers + RTP payload data)
   For G.729 with 20 msec packets (20 bytes), the resulting efficiency is 33%.
2) Use of the composite headers of the present invention while all mini packets are transmitted in a transparent mode:
   when multiplexing G.729 compressed voice sources of 20 msec packets (20 bytes) the bandwidth efficiency is calculated to be:
      10 G.729 channels multiplexed : bandwidth efficiency =51%
      100 G.729 channels multiplexed : bandwidth efficiency=55%
3) Use of the composite headers of the present invention while applying the compressed mode when possible:
   when multiplexing constant bit rate G.729 compressed voice sources of 20 msec packets (20 bytes) the bandwidth efficiency is calculated to be:
      10 G.729 channels multiplexed: bandwidth efficiency = 63%
      100 G.729 channels multiplexed: bandwidth efficiency= 71%
   When Voice Activity Detector (VAD) is used with G.729 codecs, a typical voice activity period is of 400msec. A 400msec period consists of 20 G.729 packets of 20 bytes each. Assuming that the first three packets are transmitted with a transparent RTP header and the rest of 17 packets are transmitted with compressed RTP header, the calculated bandwidth efficiency would be:
   when 10 channels with voice activity are multiplexed:
      the bandwidth efficiency = 61%.
      when 100 channels with voice activity are multiplexed: the bandwidth efficiency = 69%.

Fig. 5 illustrates a layered communication model 500 constructed in accordance with the method of the present invention. At the uppermost layer 5 of the seven layers ISO model, 510, the optional payloads are presented: voice, DTMF and other RTP compatible applications (constructed in accordance with RTP/RTCP protocols, facsimile (in accordance with T.38 Recommendation), and voiceband data (in accordance with MoIP). These payloads ride an intermediate layer 520 and optionally together with other UDP applications ride the forth layer 530, preferably together with TCP. These in turn are transported over the third layer, the IP layer 540.

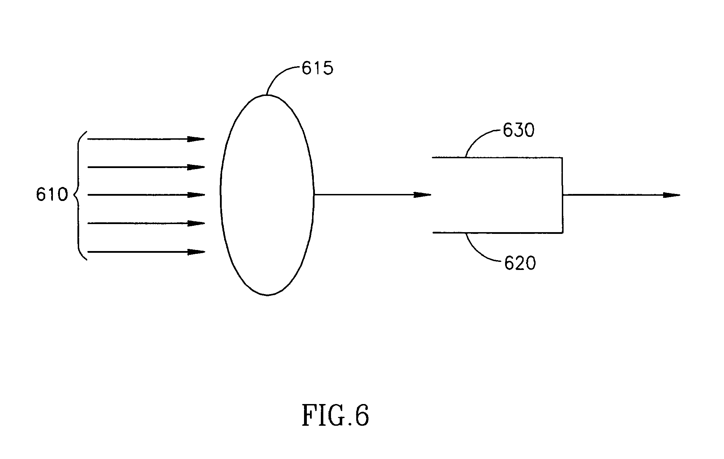

Fig. 6 illustrates the use of the TIMER-MUX according to the present invention. In Fig. 6, mini-packets 610 are received at a scheduler 615. The scheduler schedules packets for assembly into a UDP payload by placing packets into a packet assembly buffer 620. Upon expiration of the TIMER-MUX 630, an UDP packet is transmitted. The TIMER-MUX value depends on the link speed and transfer delay. The higher the TIMER-MUX value the better the bandwidth efficiency. However, higher TIMER-MUX value could increase the delay for voice packets.

It will be appreciated that the above-described methods may be varied in many ways, including but not limited to, changing the exact implementation used. It should also be appreciated that the above described description of methods and networks are to be interpreted as including network in which the methods are carried out and methods of using the network components.

The present invention has been described using non-limiting detailed descriptions of preferred embodiments thereof that are provided by way of example and are not intended to limit the scope of the invention. It should be understood that features described with respect to one embodiment may be used with other embodiments and that not all embodiments of the invention have all the features shown in a particular figure. Variations of embodiments described will occur to persons of the art. Furthermore, the terms "comprise", "include", "have" and their conjugates shall mean, when used in the claims "including but not necessarily limited to".

## Claims

1. A method for increasing bandwidth usage efficiency of an IP network (125), comprising forwarding a plurality of communication frames (430) each adapted to be used as a UDP payload, wherein each of said plurality of communication frames (430) comprises a plurality of mini packets (350, 350', 350", 440aₙ, 610), and wherein at least some of said mini packets (350, 350', 350", 440ₙ, 610) comprising:
a data packet (360, 360', 360"), and
a composite header (450ₙ) which comprises:
a mini header comprising:
an identification of a user associated with the data packet (310, 310', 310");
an indication of the length of said mini packet (330, 330', 330"); and
a protocol header (340, 340', 340"); and
**characterized in that** said mini header further comprises a flag (320, 320', 320") indicating whether said protocol header (340, 340', 340") is in a compressed mode or is in a transparent mode.

2. A method of claim 1, wherein said identification of a user associated with a data packet (310, 310', 310") comprises the number of the port through which said data packet (360, 360', 360") is transmitted.

3. A method acording to of any one of claims 1 and 2, wherein at least one mini packet (350, 350', 350", 440ₙ, 610) having a protocol header (340, 340', 340") in a transparent mode and wherein said protocol header (340, 340', 340") is a member of the group consisting of: an RTP header, an RTCP header, a T. 38 header and a MoIP header.

4. A method according to any one of claims 1 to 3, wherein at least one mini packet (350, 350', 350", 440ₙ, 610) having a protocol header (340, 340', 340") in a compressed mode and wherein said protocol header (340, 340', 340") comprises an indication of a sequential number of a data packet (360, 360', 360") associated therewith and an indication of time in which said data packet (360, 360', 360") is transmitted.

5. A, method according to claim 4, wherein the mode of each of the protocol headers (340, 340', 340") of said plurality of mini packets (350, 350', 350", 440ₙ, 610) is determined by the following criteria:
a protocol header (340, 340', 340") of the mini packet (350, 350', 350", 440ₙ, 610) transmitted at a beginning of a communication session, shall be transmitted in a transparent mode;
whenever The information in a protocol header (340, 340', 340") is different only in the sequential number and time stamp from the information included in the protocol header (340, 340', 340") of the preceding mini packet (350, 350', 350", 440ₙ, 610) and received from the same user, the protocol header (340, 340', 340") shall be transmitted in a compressed mode;
if all mini packets (350, 350', 350", 440ₙ, 610) associated with a user were transmitted for a predetermined time with their protocol headers (340, 340', 340") being in a compressed mode, the protocol header (340, 340', 340") of the proceeding mini packet (350, 350', 350", 440ₙ, 610) shall be transmitted in a transparent mode.

6. A method according to claim 5, further comprising a criterion whereby instead of transmitting in accordance with the criteria set in claim 5 one mini packet (350, 350', 350", 440ₙ, 610) comprising a protocol header (340, 340', 340") in a transparent mode, transmitting at least two consecutive mini packets (350, 350', 350", 440ₙ, 610) each having its protocol header (340, 340', 340") in the transparent mode.

7. A method according to any of the preceding claims, wherein said communication frame (430) further comprises at least one frame header.

8. A method according to claim 7, wherein said at least one frame header is used to carry information that relates to proceeding mini packets (350, 350', 350", 440ₙ, 610) that follow said frame header.

9. A method according to claim 1, comprising:
creating a plurality of mini packets (350, 350', 350", 440ₙ, 610), wherein at least some of said mini packets (350, 350', 350", 440ₙ, 610) comprise each a data packet (360, 360', 360") and a composite header (450ₙ) which comprises a mini header providing identification of a user associated with said data packet (310, 310', 310") and a protocol header (340, 340', 340");
multiplexing a plurality of mini packets (350, 350', 350", 440ₙ, 610) into a UDP payload; and
transmitting the UDP payload over a single UDP/IP connection;
**characterized in that** said mini header further comprises an indication whether said protocol header (340, 340', 340") is in a compressed mode or is in a transparent mode.

10. The method of claim 9, wherein the identification of a user further comprises a unique channel identifier for each of the users.

11. The method of claim 10, wherein said channel identifier is assigned to packets transmitted from a user when the user requests access to the IP network.

12. A method according to claim 9, wherein the composite header (450ₙ) of each data packet (360, 360', 360") multiplexed into said UDP payload is transparent to intermediate IP routers.

13. An IP system, comprising:
a local VoIP media-gateway (250); and
at least one remote VoIP media-gateway (250);
wherein the local and said at least one remote VoIP media-gateways (250) are adapted to communicate with each other and comprising:
means adapted for receiving a plurality of data packets (360, 360', 360") from a plurality of users (210, 220, 230) at the local VoIP media-gateway (250);
means adapted for creating a plurality of mini packets (350, 350', 350", 440ₙ. 610), wherein at least some of said mini packets (350, 350', 350", 440ₙ, 610) comprise each a data packet (360, 360', 360") and a composite header (450ₙ) which comprises a mini header providing identification of a user associated with the data packet (310, 310', 310") and a protocol header (340, 340', 340");
means adapted for multiplexing a plurality of mini packets (350, 350', 350", 440ₙ, 610) into a UDP payload; and
means adapted for transmitting the UDP payload over a single UDP/IP connection to a corresponding remote VoIP media-gateway (250); **characterized in that** said mini header further comprises an indication whether said protocol header (340, 340', 340") is in a compressed mode or is in a transparent mode.

14. A communication apparatus comprising:
means operative to create a composite header (450ₙ) which comprises a mini header and a protocol header (340, 340', 340") for each of a plurality of data packets (360, 360', 360") ;
multiplexing means (630) operative to multiples said composite header (450ₙ) with a data packet (360, 360', 360") associated therewith to form a communication frame (430) adapted to be used as a UDP payload ; and
transmitting means operative to transmit the UDP payload over a single UDP/IP connection;
**characterized in that** said mini header further comprises an indication whether said protocol header (340, 340', 340") is in a compressed mode or is in a transparent mode.

15. A communication apparatus according to claim 14, and further comprising means for receiving a plurality of data packets (360, 360', 360") from a plurality of users.

## Patentansprüche

1. Ein Verfahren zur Erhöhung der Bandbreitennutzungseffizienz eines IP-Netzwerks (125), das Folgendes umfasst:
Weiterleitung einer Vielzahl von Kommunikationsrahmen (430), von denen jeder ausgebildet ist, um als UDP-Nutzlast verwendet zu werden, wobei jeder der Vielzahl von Kommunikationsrahmen (430) eine Vielzahl von Mini-Paketen (350, 350', 350", 440ₙ, 610) umfasst und wobei mindestens einige der Mini-Pakete (350, 350', 350", 440ₙ, 610) Folgendes umfassen:
ein Datenpaket (360, 360', 360'') und einen zusammengesetzten Kennsatz (450ₙ), der Folgendes umfasst:
einen Mini-Kennsatz, der Folgendes umfasst:
eine Kennzeichnung eines Benutzers, der dem Datenpaket (310, 310', 310") zugeordnet ist,
eine Angabe der Länge des Mini-Pakets (330, 330', 330");
und
einen Protokoll-Kennsatz (340, 340', 340''); und
**dadurch gekennzeichnet, dass** der Mini-Kennsatz weiter einen Merker (320, 320', 320") umfasst, der anzeigt, ob der Protokoll-Kennsatz (340, 340', 340'') sich in einem komprimierten Modus oder in einem transparenten Modus befindet.

2. Ein Verfahren gemäß Anspruch 1, wobei die Kennzeichnung eines Benutzers, dem ein Datenpaket (310, 310', 310") zugeordnet ist, die Nummer des Anschlusses umfasst, über den das Datenpaket (360, 360', 360'') übertragen wird.

3. Ein Verfahren gemäß einem beliebigen der Ansprüche 1 und 2, wobei mindestens ein Mini-Paket (350, 350', 350" , 440ₙ, 610) einen Protokoll-Kennsatz (340, 340', 340'') in einem transparenten Modus hat und wobei der Protokoll-Kennsatz (340, 340', 340") ein Mitglied der Gruppe ist, die aus Folgendem besteht: einem RTP-Kennsatz, einem RTCP-Kennsatz, einem T.38-Kennsatz und einem MoIP-Kennsatz.

4. Ein Verfahren gemäß einem beliebigen der Ansprüche 1 bis 3, worin mindestens ein Mini-Paket (350, 350', 350", 440ₙ, 610) einen Protokoll-Kennsatz (340, 340', 340") in einem komprimierten Modus hat und worin der Protokoll-Kennsatz (340, 340', 340") eine Kennzeichnung einer laufenden Zahl eines damit verknüpften Datenpakets (360, 360', 360") umfasst und eine Angabe der Zeit umfasst, in der das Datenpaket (360, 360', 360") übertragen wird.

5. Ein Verfahren gemäß Anspruch 4, worin der Modus jedes der Protokoll-Kennsatz (340, 340', 340") der Vielzahl von Mini-Paketen (350, 350', 350", 440ₙ, 610) durch folgende Kriterien bestimmt wird:
Ein Protokoll-Kennsatz (340, 340', 340") des Mini-Pakets (350, 350', 350", 440ₙ, 610), der an einem Anfang einer Kommunikationssitzung übertragen wird, wird in einem transparenten Modus übertragen;
Immer dann, wenn die Information in einem Protokoll-Kennsatz (340, 340', 340") sich nur in der laufenden Zahl und dem Zeitstempel von der Information unterscheidet, die in den Protokoll-Kennsatz (340, 340', 340") des vorhergehenden Mini-Pakets (350, 350', 350", 440ₙ, 610) eingeschlossen ist und von demselben Benutzer empfangen wird, wird der Protokoll-Kennsatz (340, 340', 340") in einem komprimierten Modus übertragen;
Wenn alle Mini-Pakete (350, 350', 350", 440ₙ, 610), die einem Benutzer zugeordnet sind, für einen vordefinierten Zeitraum übertragen werden, wobei sich ihre Protokoll-Kennsätze (340, 340', 340") in einem komprimierten Modus befinden, wird der Protokoll-Kennsatz (340, 340', 340") des fortschreitenden Mini-Pakets (350, 350', 350", 440ₙ, 610) in einem transparenten Modus übertragen.

6. Ein Verfahren gemäß Anspruch 5, das weiter ein Kriterium umfasst, wodurch anstelle des Sendens eines Mini-Pakets (350, 350', 350", 440ₙ, 610), das einen Protokoll-Kennsatz (340, 340', 340") in einem transparenten Modus umfasst, gemäß den Kriterien, die in Anspruch 5 aufgestellt sind, mindestens zwei aufeinanderfolgende Mini-Pakete (350, 350', 350", 440ₙ, 610) gesendet werden, die jeweils ihren eigenen Protokoll-Kennsatz (340, 340', 340") im transparenten Modus haben.

7. Ein Verfahren gemäß einem beliebigen der obigen Ansprüche, wobei der Kommunikationsrahmen (430) weiter mindestens einen Rahmen-Kennsatz umfasst.

8. Ein Verfahren gemäß Anspruch 7, wobei der mindestens eine Rahmen-Kennsatz verwendet wird, um Information zu tragen, die sich auf fortschreitende Mini-Pakete (350, 350', 350", 440ₙ, 610) bezieht, welche dem Rahmen-Kennsatz folgen.

9. Ein Verfahren gemäß Anspruch 1, das Folgendes umfasst:
Erzeugung einer Vielzahl von Mini-Paketen (350, 350', 350", 440ₙ, 610), wobei mindestens einige der Mini-Pakete (350, 350', 350", 440ₙ, 610) jeweils ein Datenpaket (360, 360', 360") und einen zusammengesetzten Kennsatz (450ₙ) umfassen, der einen Mini-Kennsatz umfasst, welcher die Kennzeichnung eines Benutzers liefert, der mit dem Datenpaket (310, 310', 310") verknüpft ist, und einen Protokoll-Kennsatz (340, 340', 340"),
Multiplexing einer Vielzahl von Mini-Paketen (350, 350', 350", 440ₙ, 610) in eine UDP-Nutzlast, und
Senden der UDP-Nutzlast über eine einzelne UDP/IP-Verbindung,
**dadurch gekennzeichnet, dass** der Mini-Kennsatz weiter eine Angabe umfasst, ob der Protokoll-Kennsatz (340, 340', 340") in einem komprimierten Modus oder in einem transparenten Modus vorliegt.

10. Das Verfahren gemäß Anspruch 9, worin die Kennzeichnung eines Benutzers weiter eine eindeutige Kanalkennung für jeden der Benutzer umfasst.

11. Das Verfahren gemäß Anspruch 10, wobei die Kanalkennung Paketen zugewiesen wird, die von einem Benutzer gesendet werden, wenn der Benutzer Zugriff auf das IP-Netzwerk anfordert.

12. Ein Verfahren gemäß Anspruch 9, worin der zusammengesetzte Kennsatz (450ₙ) jedes Datenpakets (360, 360', 360"), das in die UDP-Nutzlast multiplexiert wird, für IP-Zwischenrouter transparent ist.

13. Ein IP-System, das Folgendes umfasst:
ein lokales VoIP-Medien-Gateway (250), und
mindestens ein entferntes VoIP-Medien-Gateway (250),
wobei das lokale und das mindestens eine entfernte VoIP-Medien-Gateway (250) ausgebildet sind, um miteinander zu kommunizieren, und Folgendes umfassen:
Mittel, die ausgebildet sind, um eine Vielzahl von Datenpaketen (360, 360', 360") am lokalen VoIP-Medien-Gateway (250) von einer Vielzahl von Benutzern (210, 220, 230) zu empfangen,
Mittel, die ausgebildet sind, um eine Vielzahl von Mini-Paketen (350, 350', 350", 440ₙ, 610) zu erzeugen, wobei mindestens einige der Mini-Pakete (350, 350', 350", 440ₙ, 610) jeweils ein Datenpaket (360, 360', 360") und einen zusammengesetzten Kennsatz (450ₙ) umfassen, welcher einen Mini-Kennsatz umfasst, der die Kennzeichnung eines mit dem Datenpaket (310, 310', 310") verknüpften Benutzers liefert, und einen Protokoll-Kennsatz (340, 340', 340") umfasst,
Mittel, die zum Multiplexing einer Vielzahl von Mini-Paketen (350, 350', 350", 440ₙ, 610) in eine UDP-Nutzlast ausgebildet sind, und
Mittel, die ausgebildet sind, zum Senden der UDP-Nutzlast an ein entsprechendes entferntes VoIP-Medien-Gateway (250) über eine einzelne UDP/IP-Verbindung, **dadurch gekennzeichnet, dass** der Mini-Kennsatz weiter eine Angabe umfasst, ob sich der Protokoll-Kennsatz (340, 340', 340'') in einem komprimierten Modus oder in einem transparenten Modus befindet.

14. Eine Kommunikationsvorrichtung, die Folgendes umfasst:
Mittel, die arbeiten, um einen zusammengesetzten Kennsatz (450ₙ) zu erzeugen, der einen Mini-Kennsatz und einen Protokoll-Kennsatz (340, 340', 340") für jedes einer Vielzahl von Datenpaketen (360, 360', 360") umfasst,
Multiplexing-Mittel (630), die arbeiten, um den zusammengesetzten Kennsatz (450ₙ) mit einem damit verknüpften Datenpaket (360, 360', 360") zu multiplexieren, um einen Kommunikationsrahmen (430) zu bilden, der ausgebildet ist, um als UDP-Nutzlast verwendet zu werden, und
Übertragungsmittel, die arbeiten, um die UDP-Nutzlast über eine einzelne UDP/IP-Verbindung zu übertragen,
**dadurch gekennzeichnet, dass** der Mini-Kennsatz weiter eine Angabe umfasst, ob der Protokoll-Kennsatz (340, 340', 340") in einem komprimierten Modus oder in einem transparenten Modus vorliegt.

15. Eine Kommunikationsvorrichtung gemäß Anspruch 14, die weiter Mittel zum Empfangen einer Vielzahl von Datenpaketen (360, 360', 360") von einer Vielzahl von Benutzern umfasst.

## Revendications

1. Procédé destiné à augmenter le rendement d'utilisation de largeur de bande d'un réseau IP (125), comprenant le transfert d'une pluralité de trames de communication (430) étant chacune apte à être utilisée en tant que charge utile UDP, dans lequel chacune de ladite pluralité de trames de communication (430) comprend une pluralité de mini-paquets (350, 350', 350", 440ₙ, 610), et dans lequel au moins certains desdits mini-paquets (350, 350', 350", 440ₙ, 610) comprennent :
un paquet de données (360, 360', 360"), et
un en-tête composite (450ₙ) qui comprend :
- un mini-en-tête comprenant :
- une identification d'un utilisateur associé au paquet de données (310, 310', 310") ;
- une indication de la longueur dudit mini-paquet (330, 330', 330") ; et
- un en-tête de protocole (340, 340', 340"); et **caractérisé en ce que** ledit mini-en-tête comprend en outre un drapeau (320, 320', 320") indiquant si ledit en-tête de protocole (340, 340', 340") est dans un mode compressé ou est dans un mode transparent.

2. Procédé selon la revendication 1, dans lequel ladite identification d'un utilisateur associé à un paquet de données (310, 310', 310") comprend le numéro du port à travers lequel ledit paquet de données (360, 360', 360") est transmis.

3. Procédé selon l'une quelconque des revendications 1 et 2, dans lequel au moins un mini-paquet (350, 350', 350", 440ₙ, 610) a un en-tête de protocole (340, 340', 340") dans un mode transparent et dans lequel ledit en-tête de protocole (340, 340', 340") fait partie du groupe se composant de : un en-tête RTP, un en-tête RTCP, un en-tête T.38 et un en-tête MoIP.

4. Procédé selon l'une quelconque des revendications 1 à 3, dans lequel au moins un mini-paquet (350, 350', 350", 440ₙ, 610) ayant un en-tête de protocole (340, 340', 340") dans un mode compressé et dans lequel ledit en-tête de protocole (340, 340', 340") comprend une indication d'un numéro séquentiel d'un paquet de données (360, 360', 360") qui lui est associé et une indication de l'heure à laquelle ledit paquet de données (360, 360', 360") est transmis.

5. Procédé selon la revendication 4, dans lequel le mode de chacun des en-têtes de protocole (340, 340', 340") de ladite pluralité de mini-paquets (350, 350', 350", 440ₙ, 610) est déterminé selon les critères suivants :
un en-tête de protocole (340, 340', 340") du mini-paquet (350, 350', 350", 440ₙ, 610) transmis à un début d'une session de communication doit être transmis dans un mode transparent ;
chaque fois que les informations dans un en-tête de protocole (340, 340', 340") ne sont différentes qu'en ce qui concerne le numéro séquentiel et l'horodatage par rapport aux informations incluses dans l'en-tête de protocole (340, 340', 340") du mini-paquet précédent (350, 350', 350" , 440ₙ, 610) et reçu du même utilisateur, l'en-tête de protocole (340, 340', 340") doit être transmis dans un mode compressé ;
si tous les mini-paquets (350, 350', 350", 440ₙ, 610) associés à un utilisateur ont été transmis pendant un temps prédéterminé avec leurs en-têtes de protocole (340, 340', 340") dans un mode compressé, l'en-tête de protocole (340, 340', 340") du mini-paquet précédent (350, 350', 350", 440ₙ, 610) doit être transmis dans un mode transparent.

6. Procédé selon la revendication 5, comprenant en outre un critère selon lequel, au lieu de transmettre d'après les critères fixés dans la revendication 5 un mini-paquet (350, 350', 350", 440ₙ, 610) comprenant un en-tête de protocole (340, 340', 340") dans un mode transparent, transmettre au moins deux mini-paquets consécutifs (350, 350', 350", 440ₙ, 610) ayant chacun son en-tête de protocole (340, 340', 340") dans le mode transparent.

7. Procédé selon l'une quelconque des revendications précédentes, dans lequel ladite trame de communication (430) comprend en outre au moins un en-tête de trame.

8. Procédé selon la revendication 7, dans lequel ledit au moins un en-tête de trame est utilisé pour porter des informations concernant des mini-paquets précédents (350, 350', 350", 440ₙ, 610) qui suivent ledit en-tête de trame.

9. Procédé selon la revendication 1, comprenant:
la création d'une pluralité de mini-paquets (350, 350', 350", 440ₙ, 610) dans lequel au moins certains desdits mini-paquets (350, 350', 350", 440ₙ, 610) comprennent chacun un paquet de données (360, 360', 360") et un en-tête composite (450ₙ) qui comprend un mini en-tête fournissant l'identification d'un utilisateur associé au dit paquet de données (310, 310', 310") et un en-tête de protocole (340, 340', 340") ;
le multiplexage d'une pluralité de mini-paquets (350, 350', 350", 440ₙ, 610) dans une charge utile UDP ; et
la transmission de la charge utile UDP sur une connexion UDP/IP unique ;
**caractérisé en ce que** ledit mini-en-tête comprend en outre une indication indiquant si ledit en-tête de protocole (340, 340', 340") est dans un mode compressé ou est dans un mode transparent.

10. Procédé selon la revendication 9, dans lequel l'identification d'un utilisateur comprend en outre un identifiant de canal unique pour chacun des utilisateurs.

11. Procédé selon la revendication 10, dans lequel ledit identifiant de canal est affecté à des paquets transmis d'un utilisateur lorsque l'utilisateur demande l'accès au réseau IP.

12. Procédé selon la revendication 9, dans lequel l'en-tête composite (450ₙ) de chaque paquet de données (360, 360', 360") multiplexé dans ladite charge utile UDP est transparent pour les routeurs IP intermédiaires.

13. Système IP, comprenant :
une passerelle média VoIP locale (250) ; et
au moins une passerelle média VoIP distante (250) ;
dans lequel ladite passerelle média VoIP locale (250) et ladite passerelle média VoIP distante (250) sont aptes à communiquer l'une avec l'autre et comprennent :
des moyens aptes à recevoir une pluralité de paquets de données (360, 360', 360") d'une pluralité d'utilisateurs (210, 220, 230) à la passerelle média VoIP locale (250);
des moyens aptes à créer une pluralité de mini-paquets (350, 350', 350", 440ₙ, 610), dans lequel au moins certains desdits mini-paquets (350, 350', 350", 440ₙ, 610) comprennent chacun un paquet de données (360, 360', 360") et un en-tête composite (450ₙ) qui comprend un mini-en-tête fournissant l'identification d'un utilisateur associé au paquet de données (310, 310', 310") et un en-tête de protocole (340, 340', 340") ;
des moyens aptes à multiplexer une pluralité de mini-paquets (350, 350', 350", 440ₙ, 610) dans une charge utile UDP ; et
des moyens aptes à transmettre la charge utile UDP sur une connexion UDP/IP unique à une passerelle média VoIP distante correspondante (250) ;
**caractérisé en ce que** ledit mini-en-tête comprend en outre une indication indiquant si ledit en-tête de protocole (340, 340', 340") est dans un mode compressé ou est dans un mode transparent.

14. Appareil de communication comprenant :
des moyens opérationnels pour créer l'en-tête composite (450ₙ) qui comprend un mini-en-tête et un en-tête de protocole (340, 340', 340") pour chacun d'une pluralité de paquets de données (360, 360', 360") ;
des moyens de multiplexage (630) opérationnels pour multiplexer ledit en-tête composite (450ₙ) avec un paquet de données (360, 360', 360") qui lui est associé pour former une trame de communication (430) apte à être utilisée en tant que charge utile UDP ; et
des moyens de transmission opérationnels pour transmettre la charge utile UDP sur une connexion UDP/IP unique ;
**caractérisé en ce que** ledit mini-en-tête comprend en outre une indication indiquant si ledit en-tête de protocole (340, 340', 340") est dans un mode compressé ou est dans un mode transparent.

15. Appareil de communication selon la revendication 14, comprenant en outre des moyens pour recevoir une pluralité de paquets de données (360, 360', 360") d'une pluralité d'utilisateurs.
